(19) Europäisches Patentamt
European Patent Office
Office européen des brevets

(11) **EP 2 307 904 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(21) Anmeldenummer: **09777634.8**

(22) Anmeldetag: **27.07.2009**

(51) Int Cl.:
*G01S 5/02* (2010.01)　　　*G01S 5/06* (2006.01)

(86) Internationale Anmeldenummer:
**PCT/EP2009/005630**

(87) Internationale Veröffentlichungsnummer:
**WO 2010/009906 (28.01.2010 Gazette 2010/04)**

(54) **VORRICHTUNG UND VERFAHREN ZUM BESTIMMEN DER ENTFERNUNG UND/ODER ORIENTIERUNG EINES BEWEGLICHEN OBJEKTS**

DEVICE AND METHOD FOR DETERMINING THE DISTANCE AND/OR ORIENTATION OF A MOVEABLE OBJECT

DISPOSITIF ET PROCÉDÉ POUR DÉTERMINER LA DISTANCE ET/OU L'ORIENTATION D'UN OBJET MOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.07.2008 DE 102008035440**

(43) Veröffentlichungstag der Anmeldung:
**13.04.2011 Patentblatt 2011/15**

(73) Patentinhaber:
 • **Fraunhofer-Gesellschaft zur Förderung der angewandten Forschung e.V.**
  **80686 München (DE)**
 • **Friedrich-Alexander-Universität Erlangen-Nürnberg**
  **91054 Erlangen (DE)**

(72) Erfinder:
 • **EIDLOTH, Andreas**
  **91052 Erlangen (DE)**
 • **ADEL, Hans**
  **90547 Stein (DE)**
 • **THIELECKE, Jörn**
  **91056 Erlangen (DE)**
 • **POPUGAEV, Alexander**
  **91052 Erlangen (DE)**

(74) Vertreter: **Pfenning, Meinig & Partner GbR Patent- und Rechtsanwälte Joachimstaler Strasse 12 10719 Berlin (DE)**

(56) Entgegenhaltungen:
DE-A1- 10 055 289　　　DE-A1-102007 062 726
US-A- 3 540 045　　　US-A- 3 836 973
US-A1- 2003 001 775　　　US-A1- 2005 225 451
US-B1- 6 590 536

**Beschreibung**

Die Erfindung betrifft eine Vorrichtung und ein Verfahren zum Bestimmen der Entfernung und/oder der Orientierung eines beweglichen Objekts.

In der Navigation oder in der Messtechnik ist es wichtig, die Entfernung bzw. die Änderung der Entfernung in Bezug auf einen festen Standort und/oder die Orientierung eines beweglichen Objekts im Raum zu kennen. Heutzutage ist eine Vielzahl von Ansätzen zur Bestimmung der Ausrichtung eines beweglichen Objekts bekannt. Beispielsweise wird mit Hilfe von Inertialsensorik, d.h. durch Magnetfeld-, Drehraten- oder Beschleunigungssensoren die Orientierung und Bewegung eines Objekts bestimmt und ein solches Verfahren bzw. eine solche Vorrichtung ist in der EP 1 521 165 A2 beschrieben. Der Nachteil dieser Ausführungsform liegt darin, dass in den Messgrößen ein unbekannter Bias bzw. Offset der Sensoren enthalten ist, der zu mit der Zeit steigenden Fehlern im Positions- und Orientierungsergebnis führt. Dieser Fehler wird zumeist durch Stützmessungen anderer Systeme bestimmt und korrigiert. Einen weiteren Ansatzpunkt zur Bestimmung der Orientierung und Position eines Objekts stellen kamerabasierte Systeme dar. Hierbei werden mindestens drei Markierungen auf dem Messobjekt angebracht, die von Kameras erfasst und deren Position und Lage zueinander ermittelt werden, wodurch das Messobjekt im Raum definiert werden kann. Beispiele dafür sind in der DE 698 04 128 T2 und der WO 99/21134 beschrieben.

In der GB 2 130 040 A wird eine Vorrichtung zur Messung der Ausrichtung eines Schiffes beschrieben, die das GPS-System verwendet. Eine rotierende Antenne oder eine Anordnung von mehreren Antennen, die sich durch Umschaltung wie eine rotierende Antenne verhalten, empfängt dabei Funksignale von einem Satelliten und über den Phasenvergleich zwischen einer Rotationsperiode der Antenne und einer Phasen-, Doppler-, Amplituden- oder Distanzmessung, die einen periodischen Verlauf aufweisen, kann die Einfallsrichtung des Signals bestimmt werden. Daraus kann mit Hilfe der Position des Satelliten und der eigenen Position die Ausrichtung des Schiffs ermittelt werden.

In der US 3 540 045 ist ein elektromagnetisches Polarisationssystem für die Satellitenkommunikation bekannt, bei dem links- und rechtsdrehend polarisierte Signale ausgewertet werden, um Abweichungen in der Polarisationsebene des Satellitensignals zu bestimmen. Ebenfalls ist darin ein auf der Erde stationierter Sender beschrieben, der Signale mit einer definierten Polarisation abstrahlen kann, sodass am Satelliten ein möglichst geringer Verlust durch Polarisationsfehler entsteht.

Aus der US 2003/0001775 A1 ist ein Verfahren zum Lokalisieren eines Objekts unter Verwendung eines GPS-Empfängers bekannt. Dabei ist jedem Objekt ein Sender zugeordnet, der ein Signal an eine Mehrzahl von Empfangs-/Sendeeinheiten sendet. Diese Empfangs-/Sendeeinheiten umfassen einen GPS-Empfänger, über den die Empfangs-/Sendeeinheiten in ihrer Position bestimmbar sind. Weiterhin senden die Empfangs-/Sendeeinheiten Signale an einen Lokalisierungsrechner, der den Ort des Objekts mittels der Signale von mindestens drei Empfangs-/Sendeeinheiten berechnet.

US 6 590 536 B1 beschreibt ein Detektorsystem zur Erfassung der Bewegung eines Körpers, das Beschleunigungssensoren an dem Körper aufweist, deren Signale von einem Sender zu einer Basisstation übertragen werden, die mehrere Antennen aufweisen kann. Dabei werden die Signale der mehreren Antennen in Bezug auf die Orientierung ausgewertet. Dies geschieht durch Auswertung der Empfangsfeldstärken zweier als lineare Dipole ausgebildeter Antennen, welche um 90° zueinander gedreht sind. Mit Hilfe der Tangens-Funktion kann anschließend eine Drehung des Sendedipols um die Sender-Empfänger-Achse bestimmt werden.

Der Erfindung liegt die Aufgabe zugrunde, eine Vorrichtung und ein Verfahren zum Bestimmen der Entfernung und der Orientierung entsprechend einem anderen Messprinzip zu schaffen, die bei zufriedenstellenden Ergebnissen eine relativ einfache Auswertung gestatten.

Diese Aufgabe wird erfindungsgemäß durch die Merkmale der unabhängigen Ansprüche gelöst.

Durch die in den Unteransprüchen angegebenen Maßnahmen sind vorteilhafte Weiterbildungen und Verbesserungen möglich.

Erfindungsgemäß werden bei der Vorrichtung und bei dem Verfahren mindestens ein Sender und mindestens ein Empfänger verwendet, wobei jeweils einer von beiden eine Antenne mit bekannter Polarisationsebene und der andere von beiden (Sender und Empfänger) eine linksdrehend und eine rechtsdrehend zirkular polarisierte Antenne aufweisen, wobei unter den Begriff der links- und rechtsdrehenden Antenne jede Antennenanordnung fallen soll, mit der links- und rechtsdrehende Polarisationen erzeugt werden können. Aus den zwei empfangenen Signalen und dem Sendesignal werden die Phasenlagen bestimmt und miteinander verglichen. Der Vergleich geschieht durch Differenzbildung der Phasenlagen zwischen empfangenem und gesendetem Signal. Dadurch werden zwei Phasenmesswerte für die zwei Empfängerzweige erhalten. Das Messverfahren beruht somit auf einer reinen Auswertung der Trägerphase. Somit wäre keine Modulation des Sendesignals nötig, um die Messwerte zu gewinnen. Eine Modulation des Sendesignals ist aber in mehrerlei Hinsicht vorteilhaft, um Genauigkeit und Ausfallsicherheit zu verbessern sowie die im Folgenden geförderte Trennbarkeit der Symbole zu ermöglichen.

Aus den ermittelten Phasenmesswerten kann anschließend die Entfernung und die Orientierung des beweglichen Objekts berechnet werden. Wenn keine Ausgangsposition bekannt ist, wird von einem beliebigen Startpunkt ausgegangen und die Entfernungsänderung und die Orientierungsänderung bestimmt. Mit Hilfe bekannter Positionen und Orientierungen des Objekts zu mindestens einem Zeitpunkt können somit auch absolute Entfernungen und Orientierungen bestimmt werden.

Mit der einfachsten Anordnung, d.h. einem Sender und einem Empfänger kann die eindimensionale Orientierungsänderung bzw. Entfernungsänderung bestimmt werden, wobei dann die Sender- und Empfängerzeit miteinander synchronisiert sind, bzw. es muss durch ein an sich bekanntes Verfahren die Zeitabweichung bestimmt und der Fehler korrigiert werden. Für die eindimensionale absolute Orientierung wird in einem vorteilhaften Ausführungsbeispiel je nach Ausführungsform ein Referenzsender mit bekannter Orientierung bzw. ein entsprechender Referenzempfänger verwendet werden.

Sind Sender und Empfänger nicht miteinander synchronisiert, muss ein zusätzlicher Empfänger vorgesehen sein, um mit dem TDoA (time difference of arrival) Verfahren die unbekannte Sendezeit zu eliminieren.

Bei Anwendung des erfindungsgemäßen Verfahrens werden die Phasenlagen zweier Empfangssignale bezüglich der Phasenlage des Senders mit definierter Frequenz von mindestens einem Empfänger ermittelt und miteinander verglichen. Unter diesen Begriff des Vergleichs sollen auch Zwischenvorgänge, z.B. die Eliminierung des unbekannten Frequenzoffsets bei nicht synchronisiertem Sender/Empfänger unter Verwendung des TDoA Verfahrens fallen.

Als einfache Ausführungsform einer zirkular polarisierten Antenne kann eine Anordnung aus zwei gekreuzten linearen Antennen mit einem Phasenschieber, vorzugsweise 90°-Phasenschieber vorgesehen werden.

Vorteilhafterweise kann, je nach dem gewählten System mit mehreren Empfängern bzw. Sendern mit den zirkular polarisierten Antennen ein mehrdimensionales Lokalisierungssystem vorgesehen werden, wobei für eine Erfassung der dreidimensionalen Orientierung des beweglichen Objekts im Raum mindestens vier Empfänger bzw. Sender mit den zirkular polarisierten Antennen räumlich verteilt angeordnet sein können, wenn keine Synchronisation zwischen Sender und Empfänger vorgesehen ist.

Vorteilhafterweise sind bei einem Sender mit den zwei zirkular polarisierten Antennen die zwei Sendesignale in ihrer Signalform so gewählt, dass sie am Empfänger unterscheidbar sind. Für die Unterscheidung bietet sich eine Codierung zur Erzielung orthogonaler Codesequenzen an, wie sie bei CDMA(code division multiple access) - Verfahren Verwendung finden. Es können aber auch unterschiedliche Trägerfrequenzen verwendet werden, die starr gekoppelt sind, also von einer Taktquelle stammen. Auch denkbar ist die Verwendung burstartiger Modulationen, die den Übertragungskanal abwechselnd benutzen, wie dies bei TDMA (time division multiple access) Verfahren der Fall ist.

Ausführungsbeispiele der Erfindung sind in der Zeichnung dargestellt und werden in der nachfolgenden Beschreibung näher erläutert. Es zeigen

Fig. 1     eine Prinzipdarstellung der erfindungsgemäßen Vorrichtung nach einem ersten Ausführungsbeispiel,

Fig. 2     eine Darstellung entsprechend Fig. 1, bei der die Polarisationsebene der Sendeantenne um die Sender-Empfänger-Achse gedreht ist,

Fig. 3     die schematische Darstellung einer Vorrichtung nach Fig. 1 mit einem Referenzsender,

Fig. 4     eine Prinzipdarstellung der erfindungsgemäßen Vorrichtung nach einem weiteren Ausführungsbeispiel und

Fig. 5     eine Vorrichtung nach Fig. 4, bei der zusätzlich ein Referenzempfänger verwendet wird.

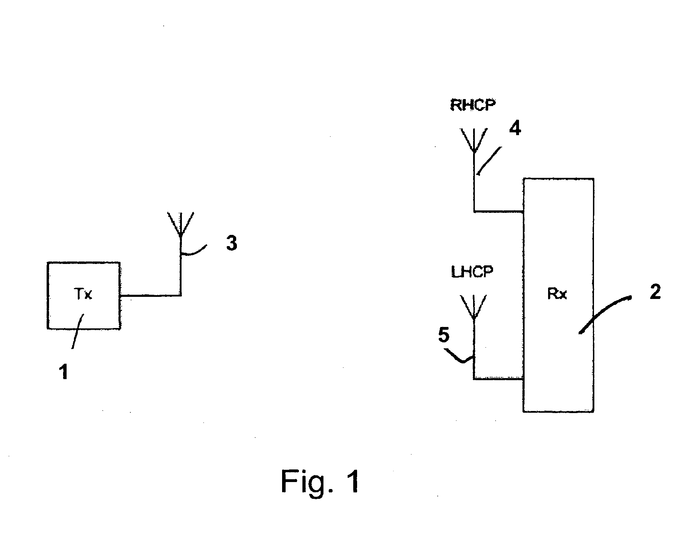

In Fig. 1 ist prinzipiell die erfindungsgemäße Vorrichtung dargestellt, die die Entfernung und/oder die Orientierung eines beweglichen Objekts zu einem vorgegebenen Punkt bestimmen soll. Dabei weist das bewegliche Objekt einen Sender 1 auf, der in seiner Lage veränderbar zu einem feststehenden Empfänger 2 angeordnet ist. Der Sender ist mit einer Antenne 3 verbunden, über die ein im Sender 1 erzeugtes Sendesignal abgestrahlt wird, wobei die Antenne 3 linear polarisiert ist, d.h. in einer bekannten linearen Polarisationsebene abstrahlt. Der Sender 1 erzeugt ein beliebiges Signal mit definierter Frequenz, wobei vorzugsweise das Signal ein auf einen Träger mit definierter Frequenz $f_0$ moduliertes Signal ist. Dabei kann die Art der Modulation entsprechend den Gegebenheiten gewählt werden.

Der Empfänger 2 ist mit zwei Antennen 4, 5 verbunden, die jeweils einem nicht dargestellten Empfangszweig zugeordnet sind. Die Antennen 4, 5 sind zirkular polarisierte Antennen, wobei die Antenne 4 rechtsdrehend zirkular polarisiert ist und die Antenne 5 linksdrehend zirkular polarisiert ist. Selbstverständlich können andere Antennenanordnungen verwendet werden, die die gewünschte Polarisation erzeugen können. Die zwei Empfängerpfade bzw. Empfangszweige unterscheiden sich nur in der Drehrichtung des rotierenden Feldstärkevektors der beiden Antennen. Der Empfänger 2 ist mit einer nicht dargestellten Auswerteeinrichtung versehen bzw. mit dieser verbunden.

Die Antennen 4, 5 empfangen das von dem Sender über die Antenne 3 ausgesandte Sendesignal mit definierter Frequenz $f_0$, und der Empfänger 2 bzw. die Auswerteeinheit ermittelt die Phasenlage der Trägerfrequenz der beiden Empfangssignale bezüglich der Phasenlage der definierten Frequenz $f_0$ des Senders 1. Um diesen Vergleich zu ermöglichen, müssen die Sender- und Empfängeruhren miteinander synchronisiert sein, d.h. die Taktquellen müssen phasenstarr miteinander verbunden sein. Dies kann durch Zugriff auf den gleichen Referenztakt z.B. über ein Glasfaser-Netzwerk oder über Funk oder durch Verwendung von Atomuhren geschehen, wobei gegebenenfalls nachkorrigiert oder -geregelt werden muss.

Aus dem Vergleich der Phasenlage des Empfangssignals jedes Empfängerzweiges mit der Phase des gesendeten Signals werden Messwerte erhalten, die im Folgenden als Phasenmesswerte $\varphi_{RHCP}$ und $\varphi_{LHCP}$ (rad) bezeichnet werden.

Unter Berücksichtigung der Bewegung des Senders 1 werden unterschiedliche Phasenmesswertverläufe erhalten:

Bewegt sich der Sender 1 auf den Empfänger zu bzw. vom Empfänger weg, so ändern sich die ermittelten Phasenmesswerte der beiden Zweige des Empfängers 2 in gleicher Weise. Wenn sich somit der Sender 1 um eine Wellenlänge des abgestrahlten Sendesignals auf den Empfänger 2 zu bewegt, so registrieren beide Empfängerzweige des Empfängers 2 einen Phasenzuwachs von 360°. Diese Verfahren sind in Lokalisierungssystemen als Trägerphasenmessung bekannt. Dabei ist allerdings zu beachten, dass sich die Phase im Abstand von einer Wellenlänge wiederholt, so dass sich hier eine Mehrdeutigkeit ergibt.

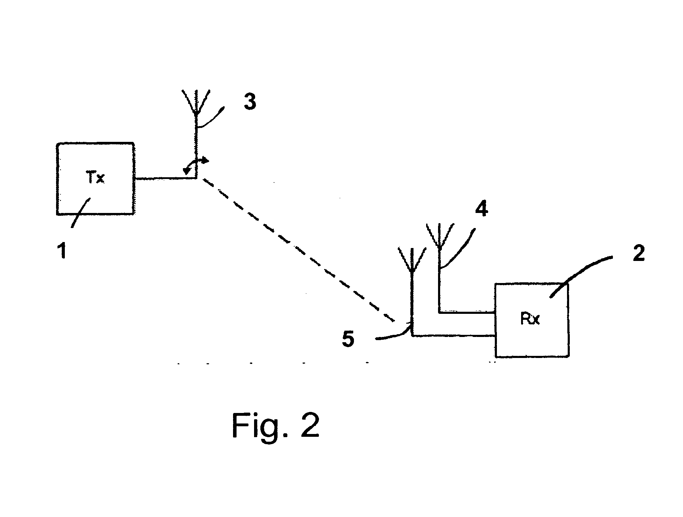

Die Drehung der Sendeantenne um die Sender-Empfänger-Achse bewirkt eine Drehung der linearen Polarisation. Dreht sich der Sender 1 physikalisch, dann ändert sich die Ausrichtung der Polarisationsebene, was am Empfänger 2 registriert und in Messgrößen umgewandelt wird. Der Einfallswinkel der Polarisationsebene auf die Empfangsantennen trägt die zu messende Information. Bei einer Drehung der bekannten Polarisationsebene des Senders 1 um die Sender-Empfänger-Achse, wie in Fig. 2 angedeutet ist, wird im Empfänger 2 bezüglich des mit der Antenne 4 verbundenen Empfängerzweiges ein Zuwachs in der Phase und in dem mit der Antenne 5 verbundenen Empfängerzweig ein ebenso großer Abfall registriert. Wenn somit $\varphi_{RHCP}$ im Wert ansteigt, dann fällt der Wert von $\varphi_{LHCP}$ entsprechend. Bei einer Umdrehung des Senders 1, beispielsweise um die in Fig. 2 dargestellte Drehachse, ergeben sich so Änderungen in den Phasenmesswerten von betragsmäßig 360°, wobei sich die beiden Messwerte gegenläufig zueinander verhalten. Welcher Phasenmesswert steigt oder fällt ist abhängig von der Drehrichtung des Senders 1. Mit Hilfe der Änderung der Phasenmesswerte kann so die Drehrichtung des Senders 1 bestimmt werden. Bei bekannter Drehrichtung lässt sich somit mit der Vorrichtung nach Fig. 1 bzw. Fig. 2 eine Orientierungsänderung, d.h. eine relative Ausrichtung bestimmen.

Die Entfernung bzw. Distanz zwischen dem Sender 1 und dem Empfänger 2 kann folgendermaßen berechnet werden:

$$x = -\frac{\lambda}{2\pi} \cdot \frac{\varphi_{RHCP} + \varphi_{LHCP}}{2} + x_0$$

Hierbei entspricht $\lambda$ der Wellenlänge des vom Sender 1 ausgestrahlten Signals in Metern und $x_0$ einem Distanzoffset ebenfalls in Metern, wobei der Distanzwert $x_0$ so gewählt werden kann, dass x der tatsächlich gemessenen Entfernung entspricht. Die beiden Phasenmesswerte sind bei der ersten Messwertaufnahme noch nicht aussagekräftig, da Signallaufzeiten im System z.B. durch Kabellängen die Werte beeinflussen. Es muss somit initial der Wert x ermittelt werden, um mithilfe der Phasenmesswerte den Distanzoffset $x_0$ zu berechnen. Ab diesem Zeitpunkt ist dann $x_0$ definiert und mit Hilfe der Phasenmessung kann dann die Position x bestimmt werden. Dies wird dann immer relativ zur ersten Position sein. In modernen Navigationssystemen wird über mehrere Messzyklen der Wert $x_0$ geschätzt bis eine hinreichende Genauigkeit und Sicherheit erzielt wird. Algorithmen, die diesen Zweck erfüllen, sind in der Literatur bekannt. Es kann beispielsweise eine einfache Mitteilung über mehrere Messwerte durchgeführt werden. Ebenso kann ein Kalmanfilter den Zustandswert und dessen Unsicherheit schätzen.

Wie schon oben ausgeführt wurde, ist auch bei der Messung der Phasenwerte zu beachten, dass die Lösung der Gleichung aufgrund der $2\pi$-Mehrdeutigkeit der Phasenmesswerte ebenfalls mehrdeutig ist. Diese Mehrdeutigkeit kann aber durch das so genannte Phase-Unwrapping der relativen Phasenmesswerte verhindert werden.

Die Orientierung des Senders 1, die in dem Ausführungsbeispiel nach Fig. 1 und Fig. 2 eindimensional ist, kann durch folgende Gleichung berechnet werden:

$$\Omega = \pm \frac{\varphi_{RHCP} - \varphi_{LHCP}}{2} + \Omega_0$$

Hierbei entspricht $\Omega$ einem Drehwinkel in radiant. Mit $\Omega_0$ kann wiederum das Ergebnis der Gleichung so angepasst werden, dass $\Omega$ dem Drehwinkel in einem zugrunde gelegten Koordinatensystem entspricht. Das Vorzeichen dieser Gleichung ist entsprechend dem Koordinatensystem für die Drehung zu wählen.

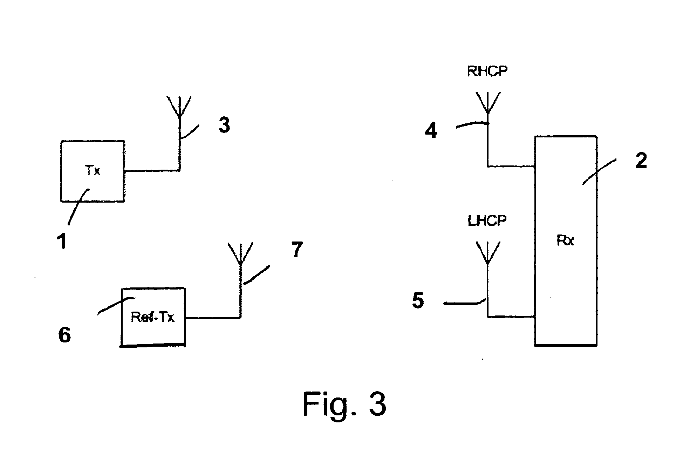

In Fig. 3 ist zusätzlich zu dem Sender 1 ein Referenzsender 6 vorgesehen, der in einem gewählten Koordinatensystem eine bekannte Orientierung aufweist. Auch dieser Referenzsender 6 ist mit einer linear polarisierten Antenne 7 versehen. Mit diesem Referenzsender kann die Vorrichtung nach Fig. 1 kalibriert werden, um eine absolute Orientierung zu einem bekannten Koordinatensystem bestimmen zu können. Wie schon oben beschrieben, empfängt dazu der Empfänger 2 über seine beiden Antennen 4 und 5 die vom Referenzsender 6 abgestrahlten Sendesignale und, wie oben beschrieben, können die Phasenmesswerte für die beiden Empfängerzweige des Empfängers 2 ermittelt werden. Diese beiden Messwerte werden zusammen mit der bekannten Orientierung des Referenzsenders $\Omega_{Ref}=\Omega$ in die obige Gleichung eingesetzt. Dadurch lässt sich $\Omega_0$ ermitteln und es ist die absolute Orientierung in einer Dimension des zu lokalisierenden Objekts bekannt.

Wie ausgeführt wurde, ist mit den Vorrichtungen nach Fig. 1 bis Fig. 3 eine eindimensionale Orientierung messbar. Um beispielsweise ein dreidimensionales Lokalisierungssystem eines beweglichen Objekts in einem begrenzten Raum aufzubauen, wie beispielsweise ein so genanntes Tracking eines Balls über ein Spielfeld, sollten mindestens vier der oben beschriebenen Empfänger 2 an verschiedenen Stellen räumlich verteilt um das Spielfeld herum angeordnet werden, in dem das bewegliche Objekt, hier der Ball, sich fortbewegt. Der Sender 1, der an oder in dem beweglichen Objekt zu finden ist, bzw. dessen Oszillator, ist zu den Oszillatoren des Empfängernetzwerkes unsynchronisiert, wobei die vier Empfänger 2 untereinander synchronisiert sind. Dies kann beispielsweise über eine Glasfaserleitung, die an alle Empfänger 2 angeschlossen ist und Signale von einem Taktgenerator bekommt, geschehen. Wegen der fehlenden Synchronisation muss zur Positionsbestimmung das TdOA-Verfahren (time difference of arrival) angewandt werden, um die unbekannte Sendezeit des Senders in den Gleichungen zu eliminieren - aus diesem Grund werden mindestens vier Empfänger benötigt.

Für die jeweiligen Empfangssignale können, wie oben beschrieben, Phasenmesswerte bestimmt werden und damit die Entfernung bzw. Entfernungsänderungen und die Drehwinkel berechnet werden, so dass die dreidimensionale Orientierung des Senders 1 bzw. des beweglichen Objekts im Raum ermittelt werden kann.

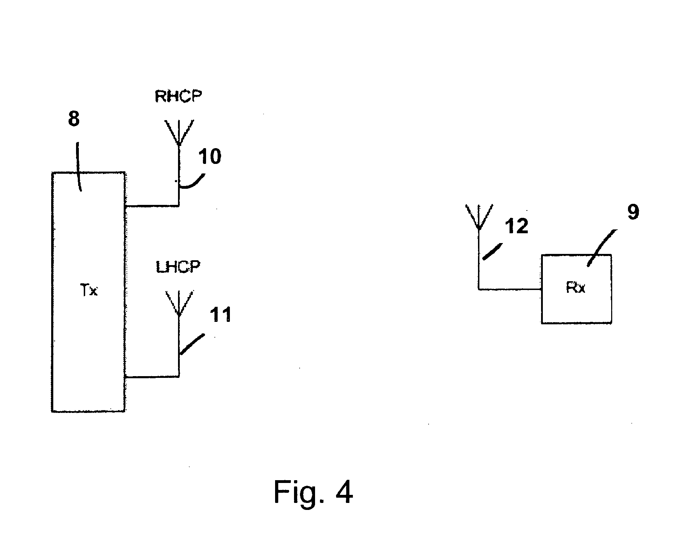

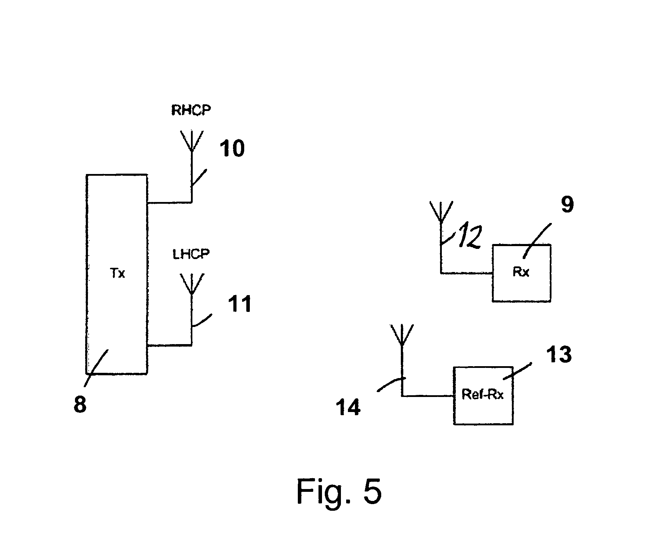

Bei den oben beschriebenen Ausführungsbeispielen ist der Sender 1 mit einer linear polarisierten Antenne 3 versehen, während der Empfänger 2 zwei zirkular polarisierte Antennen 4, 5 aufweist. Es ist jedoch auch möglich, dass das so beschriebene Messsystem "invers" betrieben werden kann, d.h., dass der Sender 8 entsprechend Fig. 4 und Fig. 5 zwei zirkular polarisierte Antennen 10, 11 umfasst, eine rechtsdrehend und die andere linksdrehend. Der Empfänger 9 ist dann mit einer Antenne 12 mit bekannter Polarisationsebene verbunden. Ein solches System könnte beispielsweise in einem Satellitennavigationssystem, wie GPS oder Galileo eingesetzt werden, wobei dann jeder Satellit mit einem Sender 8 mit zwei Sendeantennen ausgerüstet werden müsste. Selbstverständlich ist es möglich, dass anstelle eines Senders mit zwei Senderzweigen, die mit den jeweiligen Antennen 10, 11 verbunden sind, zwei gekoppelte Sender vorgesehen sind.

Die von dem Sender 8 über zwei Sendezweige erzeugten Sendesignale müssen für den Empfänger 9 unterscheidbar sein, aber sie müssen dieselbe Frequenz haben, wenn sie die gleiche Trägerfrequenz nutzen oder die Frequenzen beider Sendesignale müssen starr gekoppelt sein. So kann beispielsweise die Trägerfrequenz für beide Sendesignale gleich sein, wobei eine gemeinsame Taktquelle für beide Sendezweige mit der Frequenz $f_0$ verwendet werden kann. Wenn dies so ist, müssen für die Unterscheidbarkeit die generierten Signale bei der Modulation so geändert werden, dass der Empfänger 9 zwei Signale erkennt. Beispielsweise können die Sendesignale als orthogonale Codesequenz abgestrahlt werden, wie sie beim GPS schon zur Unterscheidung der Satelliten verwendet werden. Es ist auch denkbar, dass die Trägerfrequenzen unterschiedlich, aber starr gekoppelt sind, wobei dann im Empfänger 9 die Phasenlage bei Kenntnis der starren Kopplung korrigiert werden kann.

Der Empfänger 9 empfängt über seine lineare polarisierte Antenne 12 die beiden von den Sendeantennen 10 und 11 abgestrahlten Signale und wertet sie aus. Dabei werden, wie oben, die Trägerphasen beider Empfangssignale bestimmt und mit der Phasenlage des Sendesignals bzw. der Sendesignale verglichen. Aus diesem Vergleich werden wiederum die Phasenmesswerte $\varphi_{RHCP}$ und $\varphi_{LHCP}$ bestimmt. Ansonsten ist die Auswertung wie oben beschrieben.

In Fig. 5 ist entsprechend Fig. 3 zur Ermittlung der absoluten Orientierung ein Referenzempfänger 13 mit entsprechend linear polarisierter Antenne 14 vorgesehen, dessen Orientierung bekannt ist. Diese Referenzstation 13 könnte dann jedoch auch einen Sender beinhalten, der Korrekturdaten an den das Messobjekt bildenden Empfänger 9 sendet, in dem dann wiederum seine absolute Orientierung ermittelt wird.

Um ein Lokalisierungssystem für die dreidimensionale Orientierung eines beweglichen Objekts herzustellen, das den Empfänger 9 beinhaltet, sind wiederum mehrere Sendeanordnungen 8 notwendig, d.h. mindestens vier, wenn der Empfänger 9 nicht zu den Sendern 8 synchronisiert ist.

## Patentansprüche

1. Vorrichtung zum Bestimmen der Entfernung sänderung und Orientierung sänderung eines beweglichen Objekts mit mindestens einem am Objekt angebrachten Sender (1) mit definierter Frequenz und mindestens einem feststehenden Empfänger (2), wobei der Sender eine Antenne (3) mit bekannter Polarisationsebene und der Empfänger (2) eine linksdrehend und eine rechtsdrehend zirkular polarisierte Antenne (4, 5) aufweist und der Empfänger (2) mit einer Auswertevorrichtung versehen oder verbunden ist, die aus den zwei empfangenen Signalen bei einer phasenstarren Kopplung bzw. Synchronisation zwischen Sender (1) und Empfänger (2) Phasenmesswerte bestimmt **dadurch gekennzeichnet, daß** aus den Phasenmeßwertverläufen die Entfernungsänderung und die Orientierungsänderung berechnet werden.

2. Vorrichtung zur Bestimmung der Entfernung sänderung und Orientierung sänderung eines beweglichen Objekts, mit mindestens einem feststehenden Sender (8) und mindestens einem Empfänger (9), der an oder in dem beweglichen Objekt vorgesehen ist, wobei der Sender (8) eine linksdrehend (11) und eine rechtsdrehend (10) zirkular polarisierte Antenne aufweist,
über die jeweils ein Signal mit definierter Frequenz abstrahlbar sind und der Empfänger (9) eine Antenne (12) mit bekannter Polarisationsebene aufweist und mit einer Auswertevorrichtung versehen oder verbunden ist, die aus den zwei empfangenen Signalen bei einer phasenstarren Kopplung bzw. Synchronisation zwischen Sender (8) und Empfänger (9) Phasenmesswerte bestimmt wobei die zwei Sendesignale derart ausgebildet sind, dass sie am Empfänger (9) unterscheidbar sind **dadurch gekennzeichnet, daß** aus den Phasenmeßwertverläufen die Entfernungsänderung und die Orientierungsänderung berechnet werden.

3. Vorrichtung nach Anspruch 1 oder Anspruch 2, **dadurch gekennzeichnet, dass** zur Bestimmung der absoluten Entfernung und der absoluten Orientierung ein Referenzsender (6) bzw. ein Referenzempfänger (13) mit bekannter Position und Orientierung und einer Antenne (7, 14) mit bekannter Polarisationsebene vorgesehen sind.

4. Vorrichtung nach einem der Ansprüche 1 bis 3, **dadurch gekennzeichnet, dass** das Sendesignal ein auf einen Träger mit definierter Frequenz moduliertes Signal ist.

5. Vorrichtung nach Anspruch 2, **dadurch gekennzeichnet, dass** die zwei Sendesignale orthogonale Codesequenzen, wie im CDMA Verfahren, sind oder burstartige Modulationen sind, die einen Übertragungskanal abwechselnd nutzen, wie in TDMA Verfahren oder unterschiedliche, aber starr gekoppelte Trägerfrequenzen aufweisen.

6. Vorrichtung nach einem der Ansprüche 1 bis 5, **dadurch gekennzeichnet, dass** die Sender- und Empfängerzeit miteinander synchronisiert sind.

7. Vorrichtung nach einem der Ansprüche 1 bis 6, **dadurch gekennzeichnet, dass** mehrere Empfänger (2) bzw. Sender (8) mit den zirkular polarisierten Antennen (4, 5, 10, 11) zur Bildung eines mehrdimensionalen Lokalisierungssystems im Raum vorgesehen sind.

8. Vorrichtung nach einem der Ansprüche 1 bis 6, **dadurch gekennzeichnet, dass** die zirkular polarisierten Antennen jeweils als zwei gekreuzte lineare Antennen und einem Phasenschieber, vorzugsweise 90°-Phasenschieber ausgebildet sind.

9. Verfahren zum Bestimmen der Entfernung sänderung und Orientierung sänderung eines beweglichen Objekts, bei dem mindestens ein an oder im Objekt angebrachter Sender (1) mit einer Antenne (3) mit bekannter Polarisationsebene ein Signal mit definierter Frequenz an mindestens einen feststehenden Empfänger (2) mit zwei zirkular polarisierten Antennen (4, 5), die eine linksdrehend, die andere rechtsdrehend sendet, wobei bei einer phasenstarren Kopplung bzw. Synchronisation zwischen Sender (1) und Empfänger (2) die Phasenlagen der zwei Empfangssignale bezüglich der Phasenlage des Senders (1) ermittelt werden **dadurch gekennzeichnet, daß** aus den Phasenmeßwertverläufen die Entfernungsänderung und die Orientierungsänderung berechnet werden.

10. Verfahren zum Bestimmen der Entfernung sänderung und Orientierung sänderung eines beweglichen Objekts, bei dem mindestens ein feststehender Sender (8) über eine linksdrehend zirkular polarisierte Antenne (11) und eine rechtsdrehend zirkular polarisierte Antenne (10) jeweils ein Signal mit definierter Frequenz an mindestens einen an oder in dem Objekt angebrachten Empfänger (9) mit einer Antenne (12) mit bekannter Polarisationsebene sendet, wobei bei einer phasenstarren Kopplung bzw. Synchronisation zwischen Sender (8) und Empfänger (9) die Phasenlagen der zwei Empfangssignale bezüglich der Phasenlage des Senders (8) ermittelt werden, wobei die zwei Sendesignale in ihrer Signalform derart gewählt werden, dass sie am Empfänger (9) unterscheidbar sind **dadurch gekennzeichnet, daß** aus den Phasenmeßwertverläufen die Entfernungsänderung und die Orientierungsänderung berechnet werden.

11. Verfahren nach Anspruch 9 oder Anspruch 10, **dadurch gekennzeichnet, dass** die absolute Entfernung und die absolute Orientierung unter Verwendung der Signale eines Referenzsenders (6) bzw. eines Referenzempfängers (13) mit bekannter Position und Orientierung und einer Antenne (7, 14) mit bekannter Polarisationsebene bestimmt werden.

## Claims

1. An apparatus for determining the change of distance and change of orientation of a movable object comprising at least one transmitter (1) attached to the object and having a defined frequency and at least one fixed receiver (2), wherein the transmitter has an antenna (3) with a known polarization plane and the receiver (2) has a left-hand and a right-hand circularly polarized antenna (4, 5) and the receiver (2) is provided with or connected to an evaluation apparatus which determines measured phase values from the two received signals with a phase-locked coupling or synchronization between the transmitter (1) and the receiver (2) **characterized in that** the change of distance and the change of orientation are calculated by means of the measured phase value characteristic.

2. An apparatus for determining the change of distance and change of orientation of a movable object comprising at least one fixed transmitter (8) and at least one receiver (9) which is provided at or in the movable object, wherein the transmitter (8) has a left-hand (11) and a right-hand (10) circularly polarized antenna via which a respective signal having a defined frequency can be emitted and the receiver (9) has an antenna (12) having a known polarization plane and is provided with or connected to an evaluation apparatus which determines measured phase values from the two received signals with a phase-locked coupling or synchronization between the transmitter (8) and the receiver (9), with the two transmitted signals being configured such that they can be distinguished at the receiver (9), **characterized in that** the change of distance and the change of orientation are calculated by means of the measured phase value characteristic.

3. An apparatus in accordance with either of claims 1 or 2, **characterized in that** a reference transmitter (6) or a reference receiver (13) having a known position and orientation and an antenna (7, 14) with a known polarization plane are provided for determining the absolute distance and the absolute orientation.

4. An apparatus in accordance with one of claims 1 to 3, **characterized in that** the transmitted signal is a signal modulated onto a carrier with a defined frequency.

5. An apparatus in accordance with claim 2, **characterized in that** the two transmitted signals are orthogonal code sequences, such as in the CDMA process, or are burst-like modulations which alternately utilize a transmission channel, such as in the TDMA process, or have different, but rigidly coupled carrier frequencies.

6. An apparatus in accordance with one of claims 1 to 5, **characterized in that** the transmitter time and the receiver time are synchronized with one another.

7. An apparatus in accordance any of claims 1 to 6, **characterized in that** a plurality of receivers (2) or transmitters (8) having the circularly polarized antennas (4, 5, 10, 11) for forming a multidimensional localization system in space are provided.

8. An apparatus in accordance with one of the claims 1 to 6, **characterized in that** the circularly polarized antennas are each configured as two crossed linear antennas and a phase shifter, preferably 90° phase shifter.

9. A method for determining the change of distance and the change of orientation of a movable object in which at least one transmitter (1) attaché to or in the object having an antenna (3) with a known polarization plane transmits a signal with a defined frequency to at least one fixed receiver (2) having two circularly polarized antennas (4, 5), the one left-handed, the other right-handed, wherein the phasings of the two received signals are determined, with a phase-locked coupling or synchronization between the transmitter (1) and the receiver (2), with respect to the phasing of the transmitter (1) **characterized in that** the change of distance and the change of orientation are calculated by means of the measured phase value characteristic.

10. A method for determining the change of distance and the change of orientation of a movable object in which at least one fixed transmitter (8) transmits a respective signal with a defined frequency via a left-hand circularly polarized antenna (11) and a right-hand circularly polarized antenna (10) to at least one receiver (9) attached to or in the object having an antenna (12) with a known polarization plane, wherein the phasings of the two received signals are determined, with a phase locked coupling or synchronization between the transmitter (8) and the receiver (9), with respect to the phasing of the transmitter (8), wherein the signal shapes of the two transmitted signals are selected such that they can be distinguished at the receiver (9), **characterized in that** the change of distance and the change of orientation are calculated by means of the measured phase value characteristic.

11. A method in accordance with either of claims 9 or 10, **characterized in that** the absolute distance and the absolute orientation are determined using the signals of a reference transmitter (6) or of a reference receiver (13) with a known position and an antenna (7, 14) with a known polarization plane.

**Revendications**

1. Dispositif de détermination de la variation de la distance et de la variation de l'orientation d'un objet mobile avec au moins un émetteur (1) fixé sur l'objet, avec une fréquence définie, et au moins un récepteur fixe (2), l'émetteur comprenant une antenne (3) avec un plan de polarisation connu et le récepteur (2) comprenant une antenne (4, 5) à polarisation circulaire gauche et droite et le récepteur (2) étant muni ou relié à un dispositif d'analyse qui détermine, à partir des deux signaux reçus, lors d'un couplage ou d'une synchronisation verrouillée en phase entre l'émetteur (1) et le récepteur (2), les valeurs de phase, **caractérisé en ce que** la variation de distance et la variation d'orientation sont calculées à partir des tracés des valeurs des phases.

2. Dispositif de détermination de la variation de la distance et de la variation de l'orientation d'un objet mobile avec au moins un émetteur fixe (8) et au moins un récepteur (9) disposé sur ou dans l'objet mobile, l'émetteur (8) comprenant une antenne à polarisation circulaire gauche (11) et une antenne à polarisation circulaire droite (10) pouvant chacune émettre un signal avec une fréquence définie et le récepteur (9) comprenant une antenne (12) avec un plan de polarisation connu et étant muni ou est relié à un dispositif d'analyse qui détermine, à partir des deux signaux reçus, lors d'un couplage ou d'une synchronisation verrouillée en phase entre l'émetteur (8) et le récepteur (9), les valeurs de phase, les deux signaux émis étant conçus de façon à ce qu'ils puissent être différenciés au niveau du récepteur (9), **caractérisé en ce que** la variation de distance et la variation d'orientation sont calculées à partir des tracés des valeurs des phases.

3. Dispositif selon la revendication 1 ou la revendication 2, **caractérisé en ce que**, pour la détermination de la distance absolue et de l'orientation absolue, un émetteur de référence (6) ou un récepteur de référence (13) avec une position et une orientation connue et une antenne (7, 14) avec un plan de polarisation connu sont prévus.

4. Dispositif selon l'une des revendications 1 à 3, **caractérisé en ce que** le signal émis est un signal modulé sur une porteuse ayant une fréquence définie.

5. Dispositif selon la revendication 2, **caractérisé en ce que** les deux signaux émis sont des séquences de code orthogonales, comme dans le procédé CDMA, ou des modulations par salves, qui utilisent alternativement un canal de transmission, comme dans le procédé TDMA, ou comprennent des fréquences porteuses différentes mais couplées de manière rigide.

6. Dispositif selon l'une des revendications 1 à 5, **caractérisé en ce que** le temps de l'émetteur et le temps du récepteur sont synchronisés entre eux.

7. Dispositif selon l'une des revendications 1 à 6, **caractérisé en ce que** plusieurs récepteurs (2) ou émetteurs (8) munis des antennes à polarisation circulaire (4, 5, 10, 11) sont prévus pour la formation d'un système de localisation pluridimensionnel dans l'espace.

8. Dispositif selon l'une des revendications 1 à 6, **caractérisé en ce que** les antennes à polarisation circulaire sont formées par deux antennes linéaires croisées et un déphaseur, de préférence un déphaseur à 90°.

9. Procédé de détermination de la variation de distance et de la variation d'orientation d'un objet mobile, dans lequel un émetteur (1) fixé sur ou dans l'objet, muni d'une antenne (3) ayant un plan de polarisation connu, émet un signal à fréquence définie, à au moins un récepteur fixe (2) muni de deux antennes (4, 5), l'une à polarisation circulaire gauche, l'autre à polarisation circulaire droite, les phases des deux signaux reçus étant déterminées par rapport à la phase de l'émetteur (1) lors d'un couplage ou d'une synchronisation verrouillée en phase entre l'émetteur (1) et le récepteur (2), **caractérisé en ce que** la variation de distance et la variation d'orientation sont calculées à partir des tracés des valeurs des phases.

10. Procédé de détermination de la variation de distance et de la variation d'orientation d'un objet mobile, dans lequel au moins un émetteur fixe (8) émet, par l'intermédiaire d'au moins une antenne à polarisation circulaire gauche (11) et d'une antenne à polarisation circulaire droite (10), un signal à fréquence définie à au moins un récepteur (9) fixé sur ou dans l'objet, muni d'une antenne (12) avec un plan de polarisation connu, les phases des deux signaux reçus étant déterminées par rapport à la phase de l'émetteur (8) lors d'un couplage ou d'une synchronisation verrouillée en phase entre l'émetteur (8) et le récepteur (9), la forme des deux signaux émis étant choisie de façon à ce qu'ils puissent être différenciés au niveau du récepteur (9), **caractérisé en ce que** la variation de distance et la variation d'orientation sont calculées à partir des tracés des valeurs des phases.

11. Procédé selon la revendication 9 ou la revendication 10, **caractérisé en ce que** la distance absolue et l'orientation absolue sont déterminées à l'aide des signaux d'un émetteur de référence (6) ou d'un récepteur de référence (13) avec une position et une orientation connues et d'une antenne (7, 14) avec un plan de polarisation connu.

Fig. 1

Fig. 2

Fig. 3

RHCP

**8**

**10**

LHCP

Tx

**11**

**12**

**9**

Rx

# Fig. 4

RHCP

**10**

Tx

LHCP

**11**

**8**

**9**

**12**

Rx

**13**

Ref-Rx

**14**

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1521165 A2
- DE 69804128 T2
- WO 9921134 A
- GB 2130040 A
- US 3540045 A
- US 20030001775 A1
- US 6590536 B1